# EUROPEAN PATENT APPLICATION

(11) **EP 3 444 445 A1**
(43) Date of publication of application: **20.02.2019**
(21) Application number: 18187778.8
(22) Date of filing: 07.08.2018
(51) Int. Cl.: F01D 21/04, F02C 3/107, F02C 7/36

(54) **MECHANICAL FUSE DEVICE AND METHOD FOR OPERATING A MECHANICAL FUSE DEVICE**

(30) Priority: 18.08.2017 DE 102017214459
(71) Applicant: Rolls-Royce Deutschland Ltd & Co KG, 15827 Blankenfelde-Mahlow (DE)
(72) Inventor: WUESTENBERG, Hannes, 15827 Blankenfelde-Mahlow (DE)
(74) Representative: Maikowski & Ninnemann Patentanwälte Partnerschaft mbB

(57) **Abstract**

The invention relates to a mechanical fuse device (1) with two connecting parts (31, 32) coupled to a ring gear mount (101) of a gearbox (14) in a geared aircraft turbofan engine, with means (40) to automatically trigger a position change of at least one of two the connecting parts (31, 32) relative to the respective other connecting part (32, 31) from a first position into a second position in dependence of a torque (T) effective on at least one of the two connecting parts (31, 32). It also relates to a method for operating a mechanical fuse device (1).

## Description

The invention relates to a mechanical fuse device with the features of claim 1 and a method for operating a mechanical fuse device with the features of claim 13.

Geared turbofan aircraft engines sometimes require some means to mitigate damages that might occur after a failure. A failure might involve the rotation prevention of at least one part of the drive train. Such a failure might be e.g. a shaft breaking, a rotor-casing contact or a bearing seizure. This becomes even more important for high bypass aircraft engines, in which the drag of a locked fan would be considerable. In other cases the deliberate disengagement of engine parts might be required.

Therefore, geared aircraft turbofan engines with an improved disengagement capability, are required.

This is addressed by a mechanical fuse device with the features of claim 1.

The mechanical fuse device comprises two connection parts in a geared aircraft turbofan engine. The two connecting parts are coupled to ring gears of a gearbox in the geared turbofan engine.

The mechanical fuse device further comprises a means to automatically trigger a position change in at least one of the two connecting parts relative to the respective other connecting part from a first position into a second position. This position change can be e.g. a disengagement of the connecting parts.

The position change takes place in dependence of a torque effective on the connecting parts. The torque is effectively transmitted via a ring gear device, in particular a non-nominal torque or a reversal in the direction of the torque.

In one embodiment, the means to automatically trigger the position change in the mechanical fuse device comprise at least one helical gear for changing the position of at least one of the two connecting parts depending on the torque effective on the connecting parts. All the means can have different torque transmission characteristics depending on the torque input (i.e. the absolute value as well as the direction of the torque).

In a further embodiment the means to automatically trigger the position change comprise two parallel helical gear connections, the helical angles forming an apex. This could e.g. be used in a planetary gearbox with a two-part ring gear or a two-part sun gear. In this configuration the axial loads which are present in a gearbox with two helical gears are put to use in triggering the deliberate position change in the connecting parts of the mechanical fuse device.

In one embodiment the helical gear connection comprises an apex trailing design or an apex leading design. The apex is the geometric intersection of the helical angles of two parallel helical gears, i.e. it defines the orientation of the helical gears. In an apex leading design the axial load works from the inside to the outside. In an apex trailing design the the axial load works from the outside to the inside.

In a further embodiment, the changing of the position of the connecting parts, in particular a mechanical failure of a bolt connection, depends on an axial load transmitted by the helical gear connection. The movement of a helical gear creates an axial movement or load. This can be used to deliberately apply some load on the bolt connection. The bolt connection is designed to fail under predetermined conditions, such as a torque exceeding a certain threshold value or a torque changing directions. The axial loading can also lead to a decreased pressure within the bolted flange. This can result in circumferential slipping. This slipping can be used to fail the bolts as well. In particular a shear neck on the bold can be "cut" through the "sharp" engine part.

In one embodiment, two connecting parts are each connected with one ring gear device, the two connecting parts being connected to each other with at least one bolt connection the at least one bolt connection designed to fail under a predetermined torque, i.e. a predetermined value, or a predetermined torque direction. In this case, two separate connecting parts are held together with the bolt connection.

In an alternative embodiment, two connecting parts are each connected with one ring gear device, the two connecting parts being connected to the ring gear devices with bolt connections designed to fail under a predetermined torque or a predetermined torque direction. In this case, the connecting parts are both located on one device.

In both embodiments, the connecting parts connect the two ring gear devices of the gearbox.

In a further embodiment, the torque transmission characteristics of the helical gear connection is asymmetric relative to the torque applied to the helical gear connection. This means that the behavior of the mechanical fuse device depends on the direction of the torque applied.

In one further embodiment, the first and / or second connecting parts are rigidly connected to the ring gear mount of the gearbox or the first connecting part is in one piece with the ring gear mount of the gearbox or to a support structure of the engine, such as a casing.

The first and / or second connecting part can, in one embodiment, be coupled to the input shaft and / or the output shaft of the gearbox.

In particular - but not exclusively - the mechanical fuse device can be e.g. used to release the ring gear mount decoupling a driven part, in particular a propulsive fan, in the case of a disruptive event (e.g. gearbox seizure).

In one embodiment the planetary gearbox is coupled to a propulsive fan of a geared aircraft turbofan engine, the propulsive fan being configured to drive an electrical generator in windmilling operation conditions via the gearbox and the ring gear mount. If the propulsive fan is not actively driven by the primary power source such as the turbine, the fan should at least freely rotate (windmilling) because otherwise the engine has a large aerodynamic drag. Alternatively or in addition the propulsive fan can being configured to be driven by external power source (e.g. an electrical motor, e.g. driven by the ring gear mount which lead to the powering of the propulsive fan) when decoupled through the mechanicals fuse from its primary power source. By actively driving the propulsive fan if the primary power source is not available (e.g. due to a failure) the aerodynamic drag can be further reduced.

The issue is also addressed by a method with the features of claim 13.

A means automatically triggers automatically a position change (e.g. disengagement) in or of the mechanical fuse device from the first position into a second position of at least one of the two connecting parts relative to the respective other connection part in dependence of a torque effective on at least one of the two connecting parts,

In one embodiment it is possible that the torque is effectively transmitted via at least one ring gear device of the gearbox, in particular a non-nominal torque or a reversal in the direction of the torque.

One embodiment of the method comprises the disengagement of the mechanical fuse device resulting in the decoupling of the gearbox from other parts of the geared aircraft turbo engine.

Embodiments of the invention are shown in the figures, where
- Fig. 1: shows a schematic drawing of a geared aircraft turbofan engine according to the prior art;
- Fig. 2: shows a schematic representation of a first embodiment of a mechanical fuse device;
- Fig. 3: shows a schematic representation of a second embodiment of a mechanical fuse device;
- Fig. 4: shows a diagram of the torque and power transmission in an embodiment of the mechanical fuse device;
- Fig. 5: shows a schematic drawing of the frontal portion of a turbofan engine with a gearbox (planetary arrangement) with the location of an embodiment of the mechanical fuse device.

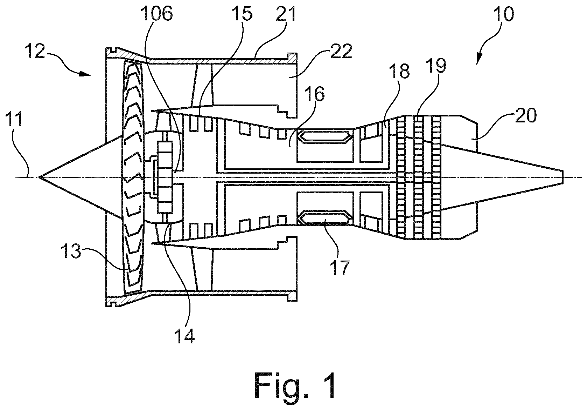

With reference to Fig. 1, a geared turbo fan engine is generally indicated at 10, having a principal and rotational axis 11. The engine 10 comprises, in axial flow series, an air intake 32, a propulsive fan 13 (could be more than one stage), a gearbox 14, an intermediate pressure compressor 15, a high-pressure compressor 16, a combustion equipment 17, a high-pressure turbine 18, an intermediate-pressure turbine 19 and an exhaust nozzle 20. A fan casing 21 generally surrounds the engine 10 and defines the intake 32.

The geared turbofan engine 10 works in the conventional manner so that air entering the intake 32 is accelerated by the propulsive fan 13 to produce two air flows: a first air flow into the intermediate pressure compressor 15 and a second air flow which passes through a bypass duct 22 to provide the main propulsive thrust. The intermediate pressure compressor 15 compresses the airflow directed into it before delivering that air to the high pressure compressor 16 where further compression takes place.

The compressed air exhausted from the high-pressure compressor 16 is directed into the combustion equipment 17 where it is mixed with fuel and the mixture is combusted. The resultant hot combustion products then expand through, and thereby drive the high pressure turbine 18 and intermediate pressure turbine 19 before being exhausted through the nozzle 20 to provide additional propulsive thrust. The high pressure turbine 18 and the intermediate pressure turbine 19, respectively, drive the high pressure compressor 16 and the intermediate pressure compressor 15, each by suitable interconnecting shaft assembly.

An intermediate pressure shaft also drives the propulsive fan 13 via the gearbox 14. The gearbox 14 is a reduction gearbox in that it gears down the rate of rotation of the propulsive fan 13 by comparison with the intermediate pressure compressor 15 and intermediate pressure turbine 19.

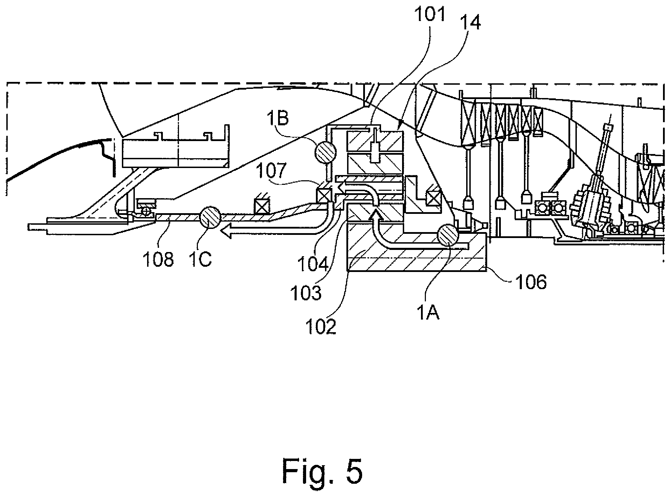

The gearbox 14 in the embodiment shown is an epicyclic planetary gearbox (see also Fig. 5) having static ring gear devices 111, 112, rotating and orbiting planet gears 103 supported by a planet carrier 104 and a rotating sun gear 102. The ring gear devices 111, 112 comprise each a helical gearing. The helical gearing is so oriented that the helical angles form an apex.The planetary gears 103 have two matching gears for the helical gear devices 111, 112.

The embodiment shown in Fig. 1 has a specific shaft arrangement which is understood not to be limiting. The embodiments described in the following can also work with a 2- or 3-shaft arrangement.

As shown in Fig. 1, geared turbofan engines 10 are known in the art. With increasing power ratings and / or increasing diameters of the propulsive fans 13, the loads on the geared turbofan engine 10 are increasing. Therefore, it seems advisable to introduce flexible measures to operate rotational parts and e.g. counteract potential failure modes or extreme events such as e.g. a fan blade off, a core blade off, a bird strike, a mainline bearing seizure or a gearbox 14 seizure.

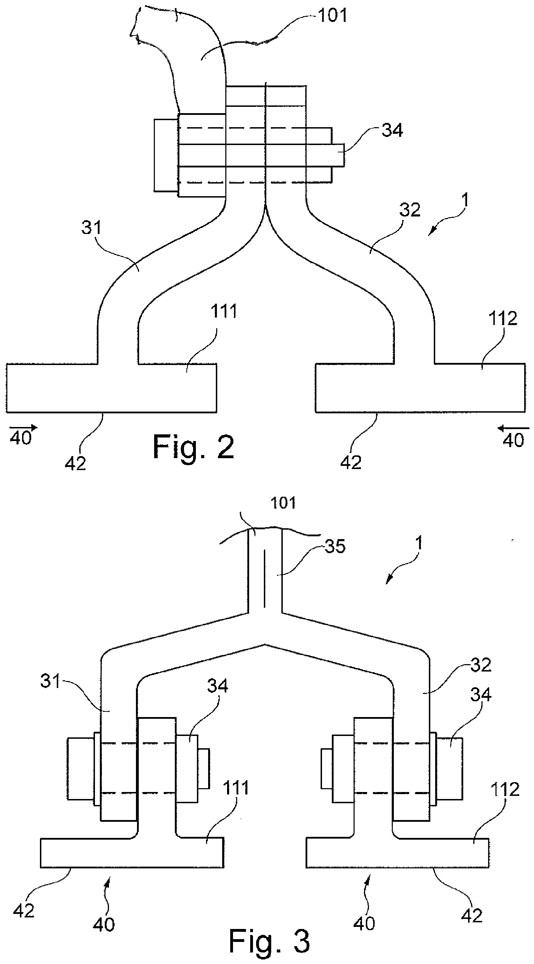

In Fig. 2, a first embodiment of a mechanical fuse device 1 is shown. The mechanical fuse device 1 is here coupled at one end with the ring gear mount 101 of a geared turbofan engine 10 as shown in Fig. 1. At the opposite end, the mechanical fuse device 1 is coupled to ring gears devices 111, 112. The connection to the ring gear mount 101 is in particular shown in connection with Fig. 5.

The mechanical fuse device 1 comprises two connecting parts 31, 32. Connecting means in this context that the connecting parts 31, 32 under nominal operation conditions connect the ring gear mount devices 111, 112 and the ring gear mount 101.

In Fig. 2, the connected position of the mechanical fuse device 1 is shown, i.e. the situation under nominal operating conditions. The connecting parts 31, 32 are positioned fixedly - through a bolt connection 34 - relative to the ring gear mount 101 of the gearbox 14 of the geared turbofan engine 10. As is shown in Fig. 5, the ring gear mount 101 is connected to a fixed part 107 of the engine 10, here a front panel.

It should be noted that Fig. 2 shows this geometric relationship only in a very schematic way.

Furthermore, the mechanical fuse device 1 comprises means 40 for automatically triggering a position change (e.g. a disengagement) of the mechanical fuse device 1 by bringing at least one of the connecting parts 31, 32 relative to the other connecting parts 32, 31 into a disengagement position in dependence of the effective torque T on the connecting parts 31, 32.

Here, the means 40 for automatically triggering the position change comprise two helical gear connections 42 each coupled to one of the the two ring gears devices 111, 112. Under nominal operation conditions, i.e. the torque is within design limits and the direction of the torque is nominal, the bolt connection 34 withstands the axial load generated by the helical gear connections 42.

Helical gear connections 42 have ridges or teeth that mesh with grooves in a mating piece and transfer to it. A helical spine comprises equally spaced grooves forming a about the shaft. The sides may be parallel or involute. This can either minimize stress concentrations for a stationary joint under high load, or allow for rotary and linear motion between the parts. Another feature of the helical gear is that it reacts differently to torque T in different directions. Furthermore, the helical gear connection generates an axial load which can open or close the mechanical fuse device 1; a helical gear can translate an angular movement into an axial movement. In embodiments shown, the helical angle can be between 15 and 45°.

Under non-nominal operating conditions, different predetermined failure modes are possible, which depend e.g. on the apex design of the helical gear connections 42.

If the apex of the helical gear is trailing, the bolt connection 34 will axially fail under a non-nominal torque direction, i.e. if a negative torque T is applied. This means that the helical gear connections 42 will produce an axial load above a predetermined design level under the negative torque T.

If the apex of the helical gear is leading, the bolt connection 34 will axially fail under an excessive torque T, i.e. the torque T it exceeding a predetermined design value.

Under failure of the bolt connection 34 the connecting parts 31, 32 will move apart, i.e. they become disengaged.

In Fig. 3, a second embodiment is shown involving a mechanical fuse device 1 coupled to the ring gear mount 101.

The connecting parts 31, 32 are part of an essentially Y-shaped part, connecting parts 31, 32 forming the two prongs of the Y coupled to ring gear devices 111, 112 through two bolt connections 34. The base 35 of the Y is connected to the ring gear mount 101. As in the first embodiment (Fig. 2), the means 40 for automatically triggering the position change comprise two helical gear connections 42 coupled to the ring gear devices 111, 112. Under nominal operation conditions, i.e. the torque is within design limits and the direction of the torque is nominal, the bolt connections 34 withstand the axial load generated by the gear connections 42.

As in the first embodiment, the apex design for the helical gear connection 42 gives rise to two different embodiments.

If the apex of the helical gear is trailing, the bolt connection 34 will axially fail under a non-nominal torque, i.e. a torque T exceeding a predetermined design value.

If the apex of the helical gear is leading, the bolt connection 34 will axially fail under a negative torque, i.e. a torque deviating from the predetermined design direction.

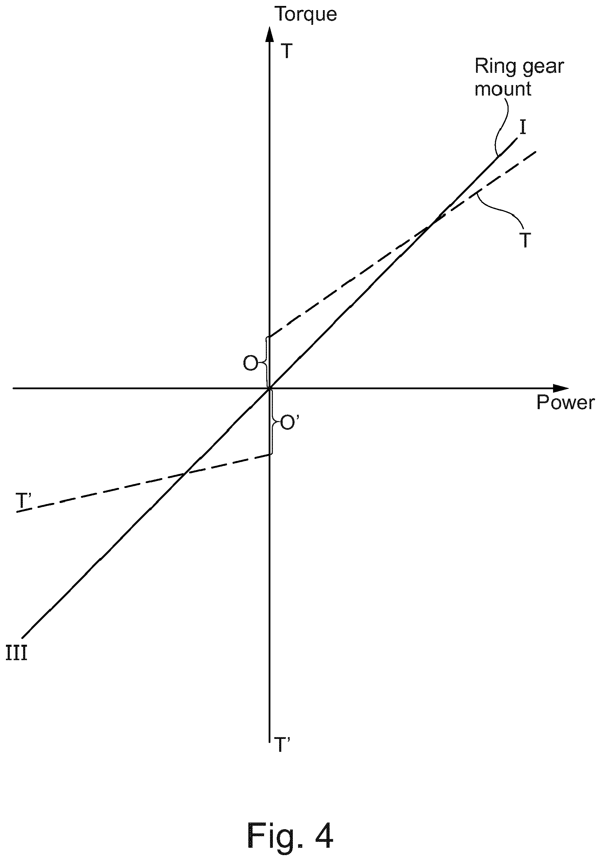

The functionality of the mechanical fuse device 1 including a preloading of the bolt connection 34 can be seen schematically in Fig. 4 illustrating the transmittable torque T, T' through a mechanical fuse device 1.

The power which is generated or consumed by a geared turbofan engine 10 with a propulsive fan 13 is plotted on the x-axis. Positive power values represent nominal operation, i.e. the turbine is driving the system. Negative power values represent a non-nominal case in which the system is driven by the propulsive fan 13 (e.g. windmilling in case of a gearbox failure, no driving through turbine).

The transmittable torque T, T' is plotted on the y-axis.

In the first quadrant I the geared turbofan engine 10 is turbine driven and the torque T is positive, i.e. the operation is nominal.

Due to a pre-loading of the mechanical fuse device 1, there is a positive intercept of the transmittable torque T line with the y-axis.

The slope of the dashed line indicating the transmittable torque T is smaller than the slope of the line representing the torque the ring gear mount. At the point where the transmittable torque T becomes smaller than the ring gear torque, the clutch in the mechanical fuse begins to slip.

In the third quadrant III the sign of the transmittable torque T' is reversed and the mechanical fuse device 1 moves from the first to the second position disengaging the gearbox in the process. The propulsive fan 13 now can turn freely in windmilling mode. Thereby, some torque can be transmitted, which can e.g. drive a generator of generating electrical power.

The torque preloading has the effect that at zero power generation, i.e. with the engine at rest, some preloaded torque is present. This can be seen by the positive offset O and negative offset O' along the y-axis. This implies that for the change in the position of the connecting parts 31, 32 the preloaded torque needs to be overcome before the ring gear mount 101 becomes disengaged.

At the point at which the absolute value of the transmittable torque T' becomes smaller than the ring gear mount torque, the mechanical fuse device 1 disengages.

In Fig. 5, some design context for the placement of the mechanical fuse device 1 is given. The view of Fig. 5 is a cross-section through the front of a geared turbofan engine 10 (see e.g. Fig. 1). Here, the gearbox 14 is having a planetary arrangement.

The turbine (not shown in Fig. 5) is driving the sun gear 102 of the gearbox 14 through a driving shaft 106. The torque is transmitted via the planetary gears 103 to the carrier 104 providing the output torque of the gearbox 14 (indicated by the arrow) via an output shaft 108. The ring gear mount 101 is static relative to the other part under nominal conditions.

The embodiments of the mechanical fuse device (see Fig. 2, 3) can be located between the static ring gear mount 101 and a fixed part 107 of the air craft engine. Alternatively it can be located between the sun gear 102 and the sun shaft, i.e the driving shaft 106.

In any case, the two connecting parts 31, 32 are under nominal conditions at rest - static - relative to each other. The connecting parts 31, 32 can disengage under non-nominal conditions as described above.

The embodiments described herein can e.g. be used in connection with a management of the rotatory behavior of the propulsive fan 13. Under certain operating conditions, the propulsive fan 13 is not required to provide thrust (e.g. windmilling after a gearbox 14 seizure or another failure, descent phase of an airplane). The decoupling of the propulsive fan 13 using a mechanical fuse device 1 provides an operation regime in which the propulsive fan 13 can freely rotate. If e.g. the operation requires a reengagement, the mechanical clutch device 1 couples the propulsive fan 1 back to a torque T source, e.g. a turbine stage.

### List of reference numbers

- 1: mechanical fuse device
- 10: geared turbo engine
- 11: principal rotational axis
- 12: air intake
- 13: propulsive fan
- 14: gearbox, power gearbox
- 15: intermediate pressure compressor
- 16: high-pressure compressor
- 17: combustion equipment
- 18: high-pressure turbine
- 19: intermediate-pressure turbine
- 20: exhaust nozzle
- 21: fan casing
- 22: by-pass duct

- 31: first connecting part
- 32: second connecting part
- 34: bolt connection
- 35: base

- 40: means for automatically triggering the mechanical fuse device
- 42: helical gear connection

- 101: ring gear mount
- 102: sun gear of power gearbox
- 103: planetary gear
- 104: carrier
- 106: driving shaft of sun gear
- 107: fixed part of engine
- 108: output shaft of gearbox

- 111: first ring gear device
- 112: second ring gear device
- O: offset of torque due to preloading (nominal direction)
- O': offset of torque due to preloading (non-nominal direction)

- T: torque (nominal direction)
- T': torque (non-nominal direction)

## Claims

1. Mechanical fuse device (1) with two connecting parts (31, 32) coupled to a ring gear mount (101) of a gearbox (14) in a geared aircraft turbofan engine, with means (40) to automatically trigger a position change of at least one of two of the connecting parts (31, 32) relative to the respective other connecting part (32, 31) from a first position into a second position in dependence of a torque (T) effective on at least one of the two connecting parts (31, 32).

2. Mechanical fuse device according to claim 1, wherein the torque (T) is effectively transmitted via ring gear devices (111, 112), in particular a non-nominal torque (T) or a reversal in the direction of the torque (T').

3. Mechanical fuse device according to claim 1 or 2, wherein the means (40) to automatically trigger the position change comprise at least one helical gear connection (42) for changing the position of at least one of the two connecting parts (31, 32) depending on the torque (T) effective on the connecting parts (31, 32).

4. Mechanical fuse device according to claim 3, wherein the means (40) to automatically trigger the position change comprise two parallel helical gear connections (42), the helical angles forming an apex.

5. Mechanical fuse device according to claim 4, wherein the helical gear connection (42) comprises an apex trailing design or apex leading design.

6. Mechanical fuse device according to at least one of the claims 3 to 5 wherein the changing of the position of the connecting parts (31, 32), in particular the mechanical failure of a bolt connection (34) depends on an axial load transmitted by the helical gear connection (42).

7. Mechanical fuse device according to at least one of the claims 3 to 5, wherein two connecting parts (31, 32) are each connected with one ring gear device (111, 112), the two connecting parts (31, 32) being connected to each other with at least one bolt connection (34), the at least one bolt connection (34) designed to fail under a predetermined torque (T) or a predetermined torque direction.

8. Mechanical fuse device according to at least one of the claims 3 to 7, wherein two connecting parts (31, 32) are each connected with one ring gear device (111, 112), the two connecting parts (31, 32) being connected to the ring gear devices (111, 112) with bolt connections (34) designed to fail under a predetermined torque (T) or a predetermined torque direction.

9. Mechanical fuse device according to at least one of the preceding claims, wherein the torque transmission characteristic of the helical gear connection (42) is asymmetric relative to the torque (T) applied to the helical gear connection (42).

10. Mechanical fuse device according to at least one of the preceding claims, wherein in the first position the connecting parts (31, 32) are mechanically engaged with each other, so that torque (T) is transmittable between the connecting parts (31, 32) and in the second position the connecting parts (31, 32) are mechanically disengaged with each, enabling a torque-free relative movement between the connecting parts (31, 32).

11. Mechanical fuse device according to at least one of the preceding claims, wherein the first and / or second connecting parts (31, 32) are rigidly connected to the ring gear mount of the gearbox (14) or the first and / or second connecting parts (31, 32) are in one piece with the ring gear mount of the gearbox (14).

12. Mechanical fuse device according to at least one of the preceding claims, wherein it is coupled to a propulsive fan (13) of an geared aircraft turbofan engine, the propulsive fan (13) being configured to drive an electrical generator in windmilling operation conditions and / or the propulsive fan (13) being configured to be driven by external power source when decoupled through the mechanical clutch device (1) from its primary power source.

13. Method for operating a mechanical fuse device (1) with two connecting parts (31, 32) coupled to a ring gear mount (101) of a gearbox (14) in a geared aircraft turbo engine, wherein
a means (40) automatically triggers a position change in or of the mechanical fuse device (1) from the first position into a second position of at least one of the two connecting parts (31, 32) relative to the respective other connection part (32, 31) in dependence of a torque (T) effective on at least one of the two connecting parts (31, 32),

14. Method according to claim 13, wherein the torque (T) is effectively transmitted via at least one ring gear device (111, 112), in particular a non-nominal torque (T) or a reversal in the direction of the torque (T').

15. Method according to claim 13 or 14, wherein the disengagement of the mechanical fuse device (1) results in the decoupling of the gearbox (14) from other parts of the aircraft turbo engine (10).
